# EUROPÄISCHE PATENTSCHRIFT

(11) **EP 0 652 804 B1**
(45) Veröffentlichungstag und Bekanntmachung des Hinweises auf die Patenterteilung: **26.08.1998**
(21) Anmeldenummer: 93915973.7
(22) Anmeldetag: 22.07.1993
(51) Int. Cl.: B01J 20/34

(54) **ENTSORGUNGSVERFAHREN FÜR UMWELTGIFTE**
PROCESS FOR DISPOSING OF ENVIRONMENTALLY HARMFUL SUBSTANCES
PROCEDE D'ELIMINATION DE SUBSTANCES NUISIBLES A L'ENVIRONNEMENT

(30) Priorität: 27.07.1992 DE 4224778
(43) Veröffentlichungstag der Anmeldung: 17.05.1995
(73) Patentinhaber: GROCHOWSKI, Horst, D-46117 Oberhausen (DE)
(72) Erfinder: GROCHOWSKI, Horst, D-46117 Oberhausen (DE)
(74) Vertreter: Schumacher, Horst, Dr. Dipl.-Phys.
(86) Internationale Anmeldenummer: EP9301941
(87) Internationale Veröffentlichungsnummer: WO9402242

(56) Entgegenhaltungen:
- EP-A- 0 200 894
- EP-A- 0 356 658
- EP-A- 0 442 503
- DE-A- 3 520 166
- DE-A- 3 908 400
- DE-C- 486 950

## Beschreibung

Die Erfindung betrifft ein Entsorgungsverfahren für an partikelförmigen Adsorptionsmittel adsorbierten Umweltgiften.

Bei der adsorptiven Gasreinigung, z. B. von Rauchgasen von Kraftwerken, Müllverbrennungsanlagen oder dergleichen, von Abgasen aus Metallherstellungsprozessen oder dergleichen oder von Abluft aus Glasherstellungsprozessen, aus Gießerei oder dergleichen und vielen anderen Gasreinigungsverfahren werden verschiedenste Arten von Umweltgiften an partikelförmigen Adsorptionsmittel, wie z. B. Aktivkohlen, absorbiert.

"Umweltgifte" sind dabei ganz allgemein als solche Komponenten zu verstehen, die im weitesten Sinne unweltschädlich sind, seien es nun Schwefel-, Stickstoff- oder Kohlenstoffoxide oder dergleichen, seien es organische Bestandteile enthaltende Stoffe, Dioxine, Furane oder dergleichen, seien es Metalle, insbesondere Schwermetalle, seien Lösungsmitteldämpfe oder andere umweltschädliche insbesondere gesundheitsschädliche Stoffe, die aus einem durch eine Adsorptionsmittelschüttung hindurchtretenden Gasstrom an dem Adsorptionsmittel adsorptiv entfernt werden können.

Es gibt bereits eine Vielzahl großtechnischer Anwendungsfälle für eine derartige adsorptive Reinigung von Gasen. Z. B. fallen in den Rauchgasen von Müllverbrennungsanlagen gleich eine ganze Reihe von Umweltgift, wie SOₓ, NOₓ, verschiedene Schwermetalle, Dioxine, Furane und dergleichen an. Der Adsorptionsprozeß solcher Umweltgifte konzentriert diese in hohem Maße auf bzw. in das Adsorptionmittel bzw. dessen Poren. Trotz dieser starken Aufkonzentrierung fallen bei diesem Reinigungsprozeß erhebliche Mengen an kontaminiertem (verbrauchtem) Adsorptionsmittel an. Daher verbietet es sich, das Adsorptionsmittel in unmittelbarer Nähe der Adsorptionsanlage zu deponieren. Vielmehr müssen andere Entsorgungsmöglichkeiten gefunden werden. Bei der Auswahl eines Entsorgungsverfahrens muß ferner berücksichtigt werden, daß der Transport den mit den Umweltgiften beladenen partikelförmigen Adsorptionsmittels je nach Art des Umweltgiftes ein neues Umweltrisiko darstellen kann.

Aus der EP-A-0 200 894 ist ein Desorptionsverfahren bekannt, bei welchem ein Adsorptionsmittel durch eine Desorptionszone geführt wird, in der die Desorption der Schadstoffe durch Erwärmung des Adsorptionsmittels auf Desorptionstemperatur mit Hilfe von Mikrowellen erfolgt. Diese Zone wird in Fließrichtung des Adsorptionsmittels von Inertgas durchströmt. Durch diesen Inertgasstrom wird verhindert, daß das entweichende Desorptionsgas, bestehend aus zuvor adsorbierten Umweltgiften, gegen die Fließrichtung des Adsorptionsmittels aus der Desorptionszone abströmt. Vielmehr verlassen desorbiertes Adsorptionsmittel und das Gemisch aus Inertgas und Desorptionsgas (Umweltgiften) die Desorptionszone gleichsinnig und werden in einen Desorptionsgassammler übergeleitet. Im oberen Bereich des Desorptionsgassammlers wird das Gasgemisch entnommen und dem Desorptionsgassammler in seinem unteren Bereich wieder zugeführt. Auf diese Weise entsteht ein durch den Desorptionsgassammler im Gegenstrom zum Adsorptionsmittel geführter Spülgas-Kreislaufstrom, aus welchem jeweils eine Teilmenge des Gasgemisches zur Weiterverarbeitung abgezogen wird. Falls erforderlich, wird das Spülgas zusätzlich in einer Anfahr- und/oder Stützheizung erwärmt, um die Aufheizzeit der Anlage zu verkürzen bzw. in Einzelfällen die Temperatureinhaltung des in der Desorptionszone durch Mikrowellen erwärmten Aktivkokses zu gewährleisten. - Bei diesem bekannten Verfahren erfolgt also die thermische Desorption unter Spülung mit Stickstoff im Gleichstrom zum Adsorptionsmittel, während in dem weiteren Reaktor, dem Sammler, eine Kreislaufspülung mit dem Gemisch aus Inertgas und Desorptionsgas im Gegenstrom zum Aktivkoks auf dem Temperaturniveau der in der Desorptionszone, dem ersten Reaktor, eingestellten Desorptionstemperatur. Die besondere Art der Aufheizung des zu desorbierenden Aktivkokses, die Überleitung des Aktivkokses in einen Spül-/Sammelreaktor sowie die nachfolgende Kreislaufstromspülung sollen es bei diesem bekannten Desorptionsverfahren ermöglichen, daß bei der Erwärmung des Adsorptionsmittels an die in der Erwärmungszone zur Führung des Adsorptionsmittels verwendeten Materialien geringere Ansprüche gestellt werden können.

Aus der DE-A-35 20 166 ist eine Anlage zur Aktivkoksregenerierung und Schwefelerzeugung bekannt, in welcher der Aktivkoks über einen Desorptionskreislauf bei etwa 500° C thermisch regeneriert wird. Hierzu wird der zu regenerierende SO₂-beladene Koks kontinuierlich (im sogenannten Kreuz-Gegenstrom) von einem Desorptionsgas durchströmt. Um den bei einer Temperatur von etwa 200° C zugeführten zu regenerierenden Aktivkoks auf eine Endtemperatur von 400° C zu erwärmen, muß das Kreislauf-Desorptionsgas durch Wärmeaustausch erwärmt werden. Aus dem Desorptionskreislauf wird kontinuierlich aufgeheiztes Desorptionsgas, welches in seiner Menge dem desorbierten SO₂ entspricht, abgezweigt, einer SO₂-Reduktion sowie einer Katalyse und einer thermischen Nachverbrennung unterworfen, bevor das gereinigte Gas an die Atmosphäre abgegeben wird. Um bei diesem bekannten Verfahren die Aktivkoksregenerierung und Schwefelerzeugung einfach und besonders wirtschaftlich zu gestalten sowie eine kompakte Bauweise und die Herstellung eines verwertbaren Endproduktes zu ermöglichen, wird die SO₂-Reduktion in dem aus dem Desorptionskreislauf abgezweigten Gas auf weniger als 95 % begrenzt und auf die thermische Nachverbrennung folgt eine Filterung des Gases über einen kontinuierlich aus dem regenerierten Koks abgezweigten und dem zu regenerierenden Koks zuzuführenden Koksteilstrom. Damit der zu regenerierende Aktivkoks bereits mit erhöhter Temperatur, nämlich etwa 200° C in den Desorptionsreaktor eintreten kann, wird dieser in einem Fest/Fest-Wärmeaustauscher mittels bereits regeneriertem Aktivkoks vorgewärmt. Der Desorptionsgaskreislaufstrom besteht aus dem Desorptionsgas selbst, das mit Hilfe eines Gebläses über eine Kreislaufleitung umgewälzt und mittels eines daran angeordneten Wärmeaustauschers auf eine Temperatur von ca. 600° C aufgeheizt wird. Bei diesem bekannten Verfahren wird also der zu regenerierende Aktivkoks, bevor er in den Desorptionsreaktor eintritt, vorgewärmt und die Desorption ohne Einspeisung eines besonderen Spülgases allein mit dem im Kreislauf geführten Desorptionsgas durchgeführt, wobei die Aufheizung des Desorptionsgases in dem Wärmeaustauscher außerhalb des Desorptionsreaktors stattfindet.

Aus der EP-A2-0 356 658 ist ein Verfahren zum Desorbieren eines mit Schadstoffen beladenen Adsorptionsmittels bekannt, bei welchem der beladene Aktivkoks auf Adsorptionstemperatur erwärmt wird, die desorbierten gasförmigen Schadstoffe gesammelt werden und das desorbierte Adsorptionsmittel anschließend gekühlt wird. Um bei diesem bekannten Verfahren das Aufbringen externer Heizenergie während der gesamten Desorptionszeit zu vermeiden, wird dem beladenen Adsorptionsmittel sauerstoffhaltiges Oxidationsgas derart zugeführt, daß das Adsorptionsmittel durch Teiloxidation der adsorbierten Schadstoffe auf Desorptionstemperatur erhitzt wird. Dabei wird die Zufuhr von Sauerstoff so gesteuert, daß ein Verbrennen des Adsorptionsmittels nicht möglich ist. Zu diesem Zweck wird der Aktivkoks in einen Vorwärmreaktor eingebracht und nachfolgend in einen Wanderbett-Desorptionsreaktor überführt. Dem Desorptionsreaktor, der hitzebeständig ausgemauert ist, wird ein Heißgas aus einer Brennkammer über eine Einspeiseleitung zugeführt. Die Brennkammer dient dazu, bei Beginn des Betriebs der Anlage den in dem Wanderbett-Desorber befindlichen zu desorbierenden Aktivkoks in die Nähe oder auf Desorptionstemperatur zu erwärmen. Wenn diese Temperatur erreicht ist, wird die Brennkammer außer Betrieb genommen und es wird über eine zweite Einspeiseleitung ein Teilstrom von in einem nachgeschalteten Aktivkokskühler erwärmter Luft dem Wanderbettdesorber zugeleitet. Diese Luft führt zu einer Teiloxidation des mit Schadstoffen beladenen Adsorptionsmittels, so daß dieser auch bei Abschalten der Brennkammer auf die Desorptionstemperatur von ca. 500° C erhitzt wird. Die dem Wanderbett-Desorber zugeführte Luft dient gleichzeitig als Spülgas für die Aufnahme des bei der Desorption gebildeten Gases aus Schadstoffen. Das entstehende Gasgemisch wird am oberen Ende des Wanderbettdesorbers als Reichgas ohne Rezirkulierung abgezogen und über einen Reichgaskühler abgeführt. - Die selbe Druckschrift beschreibt in einer alternativen Ausführungsform die Verwendung eines Wirbelschichtreaktors als Desorptionsreaktor, in welchem allerdings nicht vorgewärmte Teiloxidationsluft eingeführt und ein Reichgasgemisch als Ganzes abgezogen wird; vielmehr wird nicht vorgewärmte Luft zugeführt und das Reichgas im Kreislauf durch die Wirbelschicht geführt.

Schließlich ist aus der DE-A1-39 08 400 ein Verfahren zur Regenerierung von mit Schwefelsäure beladenem Aktivkoks bekannt, bei welchem von Sauerstoff freie Gase bei Temperaturen vorzugsweise zwischen 500 und 650° C einen Wanderbett-Desorptionsreaktor durchströmen und dabei die Schwefelsäure zu SO₂ reduzieren. Bei diesem bekannten Verfahren wird es als nachteilig beschrieben, daß selbst bei mehrfachem Durchlauf des Desorptionsgases im Gegenstrom durch das belastete Adsorbens die Temperaturen am Reaktorausgang zu niedrig sind, um eine vollständige Reduktion der Schwefelsäure zu ermöglichen. Bei diesem bekannten Verfahren erfolgt also die Wärmeeinkopplung zur Reduktion der Schwefelsäure zu SO₂, wobei ein relativ kaltes Gasgemisch gebildet wird, so daß wegen unvollständiger Reduktion von Schwefelsäure in SO₂ das Desorptionsgas Restanteile an Schwefelsäure enthält und mithin aggressiv ist. Um derart bedingte Korrosionsprobleme zu vermeiden und ein schwefelsäurefreies Reichgas zu erzeugen wird deshalb in dieser Druckschrift vorgeschlagen, den beladenen Koks in einem Wanderbettreaktor zunächst mit Heißgas im Gegenstrom aufzuheizen, die Koksschüttung an ihrer heißesten Stelle abzuziehen und in einen darunterliegenden Wanderbettreaktor zu überführen. Das den oberen als Desorptionsreaktor dienenden Wanderbettreaktor verlassende Desorptionsgas tritt nun am unteren (kalten) Ende des tiefergelegenen Wanderbettreaktors, dessen Aktivkoks bereits desorbiert ist, wieder ein, durchströmt regenerierten Aktivkoks im Gegenstrom und verläßt das zweite Wanderbett an der (obengelegenen) heißesten Stelle über eine Reichgasabführung.

Davon ausgehend liegt der Erfindung die Aufgabe zugrunde, ein Entsorgungsverfahren für an partikelförmigen Adsorptionsmitteln adsorbierten Umweltgiften zu schaffen, daß möglichst wenig neue Umweltprobleme verursacht.

Zur Lösung dieser Aufgabe wird ein Entsorgungsverfahren mit den Merkmalen des Patentanspruchs 1 vorgeschlagen.

Durch die Erfindung wird unter anderem erreicht,
- daß das mit mit dem Umweltgift beladene Adsorptionsmittel nicht über weitere Strecken, insbesondere mit Fahrzeugen transportiert werden muß, sondern am Ort oder in unmittelbarer Nähe der Adsorptionsanlage entsorgt oder vorentsorgt werden kann;
- daß das Adsorptionsmittel nach dem Desorptionsschritt entweder - gegebenenfalls nach einem Zwischenbehandlungsschritt - erneut wieder als Adsorptionsmittel einsetzbar oder aber unter vergleichbar geringen Risiken anderweitig verarbeitbar, z. B. verbrennbar;
- daß das Umweltgift in relativ stark konzentrierter oder vorkonzentrierter Form anfällt, so daß die weiter zu behandelnden Mengenströme klein sind und Weiterbehandlungsschritte, wie z. B. auch weitere Aufkonzentrierungsschritte nicht so aufwendig sind, wie bei einem stark verdünnten Anfall des Umweltgiftes.

Die Erfindung beruht auf dem Grundgedanken, in den Wanderbettreaktor in geeigneter Weise Wärme einzukoppeln und ihn gleichzeitig mit einem Gas zu durchströmen, wobei das den Wanderbettreaktor verlassende Gas vorzugsweise zumindest teilweise im Kreislauf geführt wird.

Die Wärmeeintragung (Wärmeeinkopplung) kann grundsätzlich sehr verschiedener Weise erfolgen, z. B. dadurch, daß der Wanderbettreaktor direkt oder indirekt, von außen, z. B. an seinem Mantel oder innen, z. B. durch Heizstäbe beheizt wird. Alternativ oder ergänzend dazu ist es auch möglich, die dem Wanderbettreaktor zugeführten Gase zuvor aufzuheizen und die erforderliche Desorptionswärme dadurch ganz oder teilweise einzukoppeln. Eine weitere, gegebenfalls zusätzliche Möglichkeit der Wärmeeinkopplung besteht in der Zuführung eines sauerstoffhaltigen Gases zwecks Wärmeerzeugung durch Teilverbrennung des Adsorptionsmittels. Die, vorzugsweise im Überschuß erfolgende, Zufuhr von Sauerstoff führt bei den erfindungsgemäß anwendbaren Temperaturen vorteilhafterweise zur Zerstörung eines Teiles der Umweltgifte, wie der Dioxine und anderer organischer Substanzen, durch chemische Umwandlung, so daß deren Weiterbehandlung entfällt. Die Durchströmung des Wanderbettreaktors mit einem "Heißgasstrom" bedeutet also - im Sinne der Erfindung -, daß in den Wanderbettreaktor Wärme eingekoppelt und er von einem Gasstrom durchströmt wird, wobei dieser Gasstrom nicht notwendiger Weise bereits als Heißgas in ihn einströmt. Vielmehr kann das in den Wanderbettreaktor einströmende Gas auch durch die anderweitig erfolgende Wärmeeinkopplung erst dann aufgeheizt werden und ihn als Heißgas durchströmen, wenn das Gas bereits in den Wanderbettreaktor eingeströmt ist. In jedem Falle verbessert der den Wanderbettreaktor durchströmende Gasstrom die Wärmeeinkopplung.

Zweckmäßige Ausgestaltungen des Erfindungsgegenstandes, die insbesondere die Desorption intensivieren, die Anreicherung des desorbierten Umweltgiftes verstärken und/oder die Weiterverwendung oder Weiterverarbeitung des nach der Desorption verbleibenden Adsorptionsmittels verbessern, sind in weiteren Ansprüchen enthalten.

Die vorgenannten sowie die beanspruchten und in den Ausführungsbeispielen beschriebenen erfindungsgemäßen Verfahrensschritte sowie zu verwendenden Bauteile unterliegen hinsichtlich der Verfahrensbedingungen bzw. ihrer Größe, Raumgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung findung können.

Weitere Einzelheiten, Merkmale und Vorteile des Gegenstandes der Erfindung ergeben sich aus der nachfolgenden Beschreibung des zugehörigen Verfahrensfliesbildes, mit dem - beispielhaft eine bevorzugte Ausführungsform eines erfindungsgemäßen Entsorgungsverfahrens dargestellt ist.

Der in dem Verfahrensfließbild als "Desorber" bezeichnete Wanderbettreaktor 1 wird kontinuierlich oder quasi-kontinuierlich oder getaktet von einen mit einem Umweltgift beladenen partikelförmigen Adsorptionsmittel, z. B. Aktivkoks von oben nach unten durchwandert. Als besonders geeignet hat sich ein Wanderbettreaktor mit einem Anström- bzw. Abzugsboden erwiesen, wie er in der WO88/08746 beschrieben worden ist.

In dem dargestellten Ausführungsbeispiel strömt ein 500° C heißes Heißgas unten in den Wanderbettreaktor 1 ein und verläßt ihn bei einer Temperatur von etwa 250° bis 300° C an seinem oberen Ende. Innerhalb des Reaktors erfolgt ein Gegenstrom von Adsorptionsmittel zu Heißgas. Das den Wanderbettreaktor 1 verlassende Gas besteht neben den in den Wanderbettreaktor unten eingetragenen Gaskomponenten ferner aus den desorptiv bereits von den Adsorptionsmittelpartikel entfernten Umweltgiften. Gasleitungsrohre 2 bis 4, die in Reihe mit einer Gebläse 5 geschaltet sind, sorgen für eine Durchstömung des Wanderbettreaktors 1 im Kreislauf, so daß sich das Kreislaufgas bis zu einem gewissen Sättigungswert mit dem Umweltgift anreichert. Die Wärmeeinkopplung in den Heißgastromkreislauf erfolgt zum einen mittels eines Wärmeaustauschers 6 und zum anderen mittels über einen Brenner 7 eingespreister heißer Verbrennungsgase durch Verbrennung von Erdgas und in einem Wärmeaustauscher 8 vorgewärmter Luft, welche über eine Gebläse 9 eingespreist wird. Die dem Heißgasstrom-Kreislauf durch den Brenner 7 zugeführte sowie die durch Desorption im Wanderbettreaktor 1 freiwerdende Menge an Gasen und Umweltgiften verläßt den Kreislauf an geeigneter Stelle über eine Reichgasleitung 10.

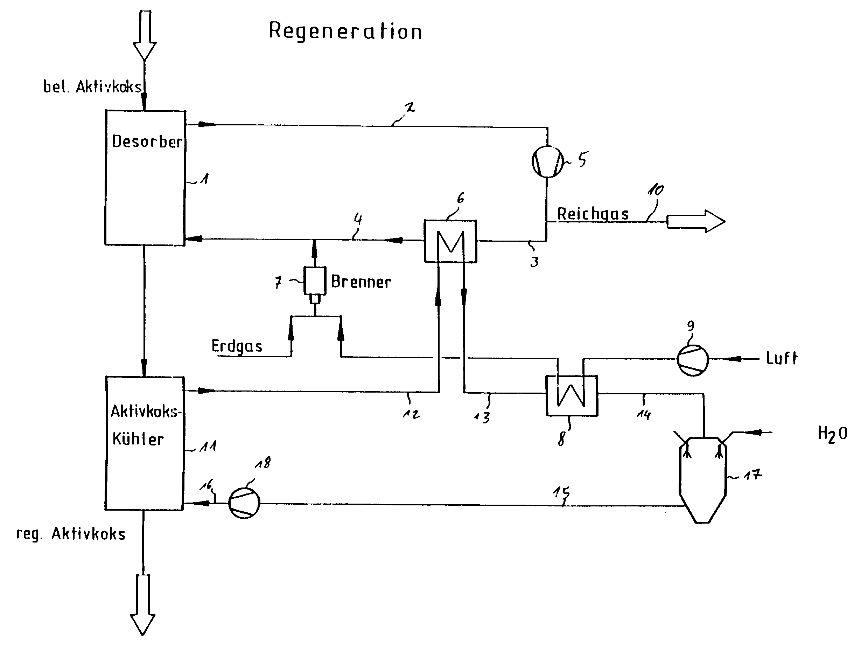

Bei dem dargestellten Ausführungsbeispiel, bei dem es sich Hinsichtlich des Umweltgiftes um SO₂ handelt, das in einer Konzentration von 17 % bei 250° C gewonnen wird, kann der thermisch desorbierte, den Wanderbettreaktor 1 unten verlassende Aktivkoks weiterverwendet werden. Er wird zunächst in einem als "Aktivkokskühler" in der Zeichnung bezeichneten Wanderbettreaktor 11 mittels eines im Kreislauf geführten Gases auf etwa 100° C abgekühlt. Der Wanderbettreaktor 11 kann grundsätzlich den gleichen Aufbau wie der Wanderbettreaktor 1 haben. Besonders bevorzugt sind beide zu einem mehrstufigen Wanderbettreaktor zusammengefaßt. Dabei dienen die Schüttgutaustrittsöffnungen zum Austritt des Schüttgutes aus dem oberen Wanderbettreaktor 1 als Schüttgutzuteilöffnungen für das darunterliegende Teilbett des Wanderbettreaktors. Das Schüttgut wandert also beide Teilbetten von oben nach unten.

Mittels einer in der Zeichnung nicht eigens dargestellten Druckregelung zwischen den aus dem Wanderbettreaktor 11 abströmen Kühlgas und dem den Wanderbettreaktor 1 zuströmenden Heißgas kann erreicht werden, daß lediglich kleine Mengen des Kühlgases von dem unteren Wanderbettreaktor in den oberen Wanderbettreaktor eintreten, während ein Überströmen von Heißgas in den unteren Wanderbettraktor vermieden wird. Hierzu ist ein lediglich geringer Überdruck des Kühlgases bezüglich des Heißgases aufrechtzuerhalten.

Als Kühlgas verwendet man bevorzugt ein solches, welches sich bezüglich des Adsorptionsmittels "Inert" verhält, d. h. mit diesem praktisch nicht reagiert. Ein solches Inertgas kann überwiegend aus Stickstoff oder Wasserdampf oder anderen Gasen bestehen, die sich gegenüber dem Adsorptionsmittel inert verhalten. Das Kühlgas wird über Leitungen 12 bis 16 ebenfalls im Kreislauf geführt. Es verläßt in dem dargestellten Ausführungsbeispiel den Wanderbettreaktor 11 z. B. bei einer Temperatur von 450° C und gibt einen Teil seiner fühlbaren Wärme in dem Wärmeaustauscher 6 an das Kreislaufgas der Desorptionstufe sowie in einem weiteren Wärmeaustauscher 8 zur Vorwärmung an die Verbrennungsluft für den Brenner 7 ab und gelangt mit etwa 250° C in einen Kühler 17 und über ein Gebläse 18 zurück in den Wanderbettreaktor 11. Das Kreislaufgas der Desorptionsstufe und/oder das Kreislaufgas der Kühlstufe kann Wasserdampf zur Reaktivierung des Adsorptionsmittels enthalten.

Ein zweistufiger Wanderbettreaktor der vorerwähnten Art ist in der erwähnten WO88/08746 ebenfalls bereits beschrieben und braucht daher nicht weiter erläutert zu werden.

Es versteht sich, daß die Kühlstufe sich nicht zwingend an die Desorptionsstufe anschließen muß. Vielmehr sind auch andere Vorgehensweisen denkbar, in denen nach der Desorptionsstufe eine weitere Aufheizung des Adsorptionsmittels erfolgt, um an dem heißen Adsorptionsmittel andere chemische Reaktionen durchzuführen.

### Ausführungsbeispiel:

Der in der Zeichnung dargestellten Desorptionsanlage wird 1 m³/h beladener Aktivkoks aufgegeben, der den Desorber 1 mit einer Temperatur von 500° C und - in gleicher Menge, aber niedrigerer Temperatur - den Aktivkokskühler 11 als regenerierter Aktivkoks wieder verläßt. Dem Kühler 17 des Kühlgaskreislaufes 11 bis 18 werden 29 kg/h Kühlwasser aufgegeben. Zur Wärmeeinkopplung werden 8,5 m³/h Erdgas eingesetzt. Das Umweltgift, bei dem es sich um SO₂ handelt, wird mit 209 m³/h bei 250° C und einer SO₂-Konzentration von 17 % gewonnen.

## Patentansprüche

1. Entsorgungsverfahren für an partikelformigen Adsorptionsmitteln adsorbierte/s Umweltgift/e mittels Desorption unter Verwendung eines im Gegenstrom zu dem Adsorptionsmittel und unter Einspeisung eines Spülgases durch einen Wanderbettreaktor im Kreislauf geführten Kreislaufgasstromes und Abzweigung einer Teilmenge aus dem Kreislauf zur Gewinnung oder Weiterverarbeitung des/der Umweltgifte/s, bei dem
das mit dem/den Umweltgiften noch beladene Adsorptionsmittel durch einen mehrere Stufen zusammenfassenden Wanderbettreaktor mit einem Anström- und Abzugsboden geleitet wird, bei dem Schüttgutaustrittsöffnungen zum Austritt des Schüttgutes aus einer oberen Stufe (Teilbett) als Schüttgutzuteilöffnungen für die darunter liegende Stufe (Teilbett) dienen
unter unmittelbarer Wärmeeinkopplung in den Wanderbettreaktor und Ausbildung des Kreislaufgasstromes als Heißgasstrom der Wanderbettreaktor von dem Heißgasstrom unter thermischer Desorption des/der Umweltgift/e und unter gleichzeitiger Bildung eines mit dem/den Umweltgift/en angereicherten Reichgases durchströmt wird und
die heißen Abgase eines Gasbrenners als die Wärme in den Wanderbettreaktor einkoppelndes Spülgas verwendet werden.

2. Entsorgungsverfahren nach Anspruch 1, dadurch gekennzeichnet, daß
der durch den Wanderbettreaktor geführte Kreislaufgasstrom mit einem Sauerstoff enthaltenden Gas wie Luft oder reinem Sauerstoff beaufschlagt wird und zumindest ein Teil des Adsorptionsmittels mit Sauerstoff unter Erzeugung von Wärme für die thermische Desorption verbrannt wird.

3. Entsorgungsverfahren nach Anspruch 1 oder 2, dadurch gekennzeichnet, daß
der durch den Wanderbettreaktor geführte Kreislaufgasstrom mit einem Reaktionsmittel zur Aktivierung des Adsorptionsmittels beaufschlagt wird.

4. Entsorgungsverfahren nach einem der Ansprüche 1 bis 3, dadurch gekennzeichnet, daß
ein Teil der zu desorbierenden oder desorbierten Umweltgifte durch chemische Umwandlung zerstört wird.

5. Entsorgungsverfahren nach einem der Ansprüche 1 bis 4, dadurch gekennzeichnet, daß
der Schüttgutaustritt aus dem Desorptions-Wanderbettreaktor in den Schüttguteintritt eines darunter gelegenen Wanderbettreaktors zum Kühlen des desorbierten Adsorptionsmittels übergeht.

6. Entsorgungsverfahren nach Anspruch 5, dadurch gekennzeichnet, daß ein geringer Überdruck des Kühlgases im Bereich des genannten Schüttguteintritts gegenüber dem Gasdruck im Bereich des genannten Schüttgutaustritts aufrecht erhalten wird, so daß eine kleine Menge des Kühlgases von dem Kühlungs-Wanderbettreaktor in den Desorptions-Wanderbettreaktor eintritt.

7. Entsorgungsverfahren nach einem der Ansprüche 1 bis 6 und 6 bis 15, dadurch gekennzeichnet, daß der Schüttgutaustritt aus dem Desorptions-Wanderbettreaktor in den Schüttguteintritt eines darunter gelegenen Wanderbettreaktors zum Kühlen des desorbierten Adsorptionsmittels übergeht.

8. Entsorgungsverfahren nach einem der Ansprüchen 1 bis 7, dadurch gekennzeichnet, daß der den Heißgasstrom bildende Gasstrom vor seinem Eintritt in den Wanderbettreaktor aufgeheizt wird.

9. Verfahren nach einem der Ansprüche 1 bis 8, dadurch gekennzeichnet, daß die Aufheizung teilweise durch indirekten Wärmeaustausch mit einer Kühlstufe für das desorbierte Adsorptionsmittel erfolgt.

10. Entsorgungsverfahren nach Anspruch 8 oder 9, dadurch gekennzeichnet, daß die Aufheizung zumindest teilweise mittels eines Gasbrenners erfolgt.

11. Entsorgungsverfahren nach einem der Ansprüche 1 bis 10, dadurch gekennzeichnet, daß eine Temperaturanhebung oder Temperatureinstellung im Wanderbettreaktor durch Beaufschlagung des durch den Wanderbettreaktor geführten Kreislaufgasstromes mit einem Zuschlagstoff erfolgt.

12. Entsorgungsverfahren nach einem der Ansprüche 1 bis 11, dadurch gekennzeichnet, daß der durch den Wanderbettreaktor geführte Kreislaufgasstrom Wasserdampf beaufschlagt wird.

13. Entsorgungsverfahren nach einem der Ansprüche 1 bis 12, dadurch gekennzeichnet, daß dem Spülgas Sauerstoff im Überschuß zugeführt wird.

## Claims

1. A disposal method for environmental pollutant(s) adsorbed on adsorbing agents in particle form by means of desorption, using a recirculating recycle gas stream passing through a moving-bed reactor countercurrently to the adsorbing agent and with feeding in of a flushing gas, and tapping off a part quantity from the circulation for the recovery or further processing of the environmental pollutant(s), wherein the adsorbing agent still contaminated with the environmental pollutant(s) is passed through a moving-bed reactor combining several stages and comprising an incoming flow- and discharge bottom, wherein bulk material discharge openings for discharging the bulk material from an upper stage (partial bed) serve as bulk material feed openings for the stage (partial bed) located therebeneath, and with heat being directly introduced into the moving-bed reactor and the recycle gas stream being a hot gas stream, the hot gas stream flows through the moving-bed reactor with thermal desorption of the environmental pollutant(s) and the simultaneous formation of a rich gas enriched with the environmental pollutant(s), and the hot waste gases of a gas burner are used as a flushing gas introducing the heat into the moving-bed reactor.

2. A disposal method according to claim 1, characterised in that the recycle gas stream passing through the moving-bed reactor is acted upon with a gas containing oxygen, such as air or pure oxygen, and at least some of the adsorbing agent is burned with oxygen, generating heat for the thermal desorption.

3. A disposal method according to claim 1 or 2, characterised in that the recycle gas stream passing through the moving-bed reactor is acted upon with a reactant to activate the adsorbing agent.

4. A disposal method according to one of claims 1 to 3, characterised in that some of the environmental pollutants which are to be desorbed or have been desorbed are destroyed by means of chemical transformation.

5. A disposal method according to one of claims 1 to 4, characterized in that the bulk material discharge from the desorbing moving-bed reactor extends into the bulk material inlet of a moving-bed reactor located therebeneath for cooling the desorbed adsorbing agent.

6. A disposal method according to claim 5, characterized in that a slight overpressure of the cooling gas in the region of the said bulk material inlet relative to the gas pressure in the region of the said bulk material discharge is maintained so that a small amount of the cooling gas from the cooling moving-bed reactor enters the desorbing moving-bed reactor.

7. A disposal method according to one of claims 1 to 6, characterized in that the bulk material discharge from the desorbing moving-bed reactor extends into the bulk material inlet of a moving-bed reactor located therebeneath for cooling the desorbed adsorbing agent.

8. A disposal method according to one of claims 1 to 7, characterized in that the gas stream forming the hot gas stream is heated before it enters the moving-bed reactor.

9. A method according to one of claims 1 to 8, characterized in that the heating is effected partly by indirect heat exchange with a cooling stage for the desorbed adsorbing agent.

10. A disposal method according to claim 8 or 9, characterized in that the heating is effected at least partly by means of a gas burner.

11. A disposal method according to one of claims 1 to 10, characterised in that raising the temperature or adjusting the temperature in the moving-bed reactor is effected by acting upon the recycle gas stream passing through the moving-bed reactor with an additional substance.

12. A disposal method according to one of claims 1 to 11, characterised in that the recycle gas stream passing through the moving-bed reactor is acted upon with steam.

13. A disposal method according to one of claims 1 to 12, characterised in that oxygen in excess is supplied to the flushing gas.

## Revendications

1. Procédé d'élimination de substances nuisibles à l'environnement adsorbées à des produits d'adsorption en forme de particules par désorption en utilisant un flux de gaz circulaire guidé en contre-courant au produit d'adsorption et conjointement avec l'introduction d'un gaz de rinçage en circuit à travers un réacteur à lit migrant et dérivation d'une quantité partielle du circuit pour l'obtention ou le traitement ultérieur des substances nuisibles où
le produit d'adsorption encore chargé des substances nuisibles à l'environnement est amené à passer à travers un réacteur à lit migrant comprenant plusieurs étages, avec un fond d'afflux et d'évacuation, où des ouvertures de sortie de produits en vrac sont destinées à la sortie des produits en vrac d'un étage supérieur (lit partiel) en tant qu'ouvertures d'attribution de produits en vrac à l'étage situé en dessous (lit partiel), où par une introduction directe de chaleur dans le réacteur à lit migrant et par une réalisation du flux de gaz circulaire sous forme de flux de gaz chaud, le réacteur à lit migrant est traversé par le flux de gaz chaud avec une désorption thermique de la ou des substances nuisibles à l'environnement et en formant simultanément un gaz riche enrichi de la/des substances nuisibles et où
les gaz d'évacuation chauds d'un brûleur à gaz sont utilisés comme gaz de rinçage couplant la chaleur dans le réacteur à lit migrant.

2. Procédé d'élimination selon la revendication 1, caractérisé en ce que le flux de gaz circulaire guidé à travers le réacteur à lit migrant est chargé en un gaz contenant de l'oxygène comme l'air ou en oxygène pur et qu'au moins une partie du produit d'adsorption est brûlée avec de l'oxygène en produisant de la chaleur pour la désorption thermique.

3. Procédé d'élimination selon la revendication 1 ou 2, caractérisé en ce que le flux de gaz circulaire guidé à travers le réacteur à lit migrant est chargé en un réactant pour activer le produit d'adsorption.

4. Procédé d'élimination selon l'une des revendications 1 à 3, caractérisé en ce qu'une partie des substances nuisibles à l'environnement à désorber ou désorbée est détruite par transformation chimique.

5. Procédé d'élimination selon l'une des revendications 1 à 4, caractérisé en ce que la sortie des produits en vrac du réacteur de désorption à lit migrant rejoint l'entrée pour les produits en vrac d'un réacteur à lit migrant situé en dessous pour refroidir le produit d'adsorption désorbé.

6. Procédé d'élimination selon la revendication 5, caractérisé en ce qu'une légère surpression du gaz de refroidissement est maintenue au voisinage de l'entrée précitée pour les produits en vrac par rapport à la pression du gaz au voisinage de la sortie précitée pour les produits en vrac de façon qu'une petite quantité du gaz de refroidissement passe du réacteur de refroidissement à lit migrant dans le réacteur de désorption à lit migrant.

7. Procédé d'élimination selon l'une des revendications 1 à 6 et 6 à 13, caractérisé en ce que la sortie pour les produits en vrac du réacteur de désorption à lit migrant rejoint l'entrée pour les produits en vrac d'un réacteur à lit migrant situé en dessous pour le refroidissement du produit d'adsorption désorbé.

8. Procédé d'élimination selon l'une des revendications 1 à 7, caractérisé en ce que le flux de gaz formant le flux de gaz chaud est chauffé avant son entrée dans le réacteur à lit migrant.

9. Procédé d'élimination selon l'une des revendications 1 à 8, caractérisé en ce que l'échauffement a lieu partiellement par un échange indirect de la chaleur avec un étage de refroidissement pour le produit d'adsorption désorbé.

10. Procédé d'élimination selon la revendication 8 ou 9, caractérisé en ce que l'échauffement a lieu au moins partiellement par un brûleur à gaz.

11. Procédé d'élimination selon l'une des revendications 1 à 10, caractérisé en ce qu'un relèvement de la température ou un réglage de la température dans le réacteur à lit migrant a lieu en chargeant le flux de gaz circulaire guidé à travers le réacteur à lit migrant d'un agrégat.

12. Procédé d'élimination selon l'une des revendications 1 à 11, caractérisé en ce que le flux de gaz circulaire guidé à travers le réacteur à lit migrant est chargé en vapeur d'eau.

13. Procédé d'élimination selon l'une des revendications 1 à 12, caractérisé en ce qu'il est amené au gaz de rinçage de l'oxygène en surplus.
